# EUROPÄISCHE PATENTSCHRIFT

(11) **EP 1 926 873 B1**
(45) Veröffentlichungstag und Bekanntmachung des Hinweises auf die Patenterteilung: **04.03.2009**
(21) Anmeldenummer: 06791685.8
(22) Anmeldetag: 26.08.2006
(51) Int. Cl.: E05B 65/20, B60R 25/00, G07C 9/00

(54) **AUSSENGRIFF FÜR EINE TÜR ODER KLAPPE AN EINEM KRAFTFAHRZEUG**
OUTER HANDLE FOR A DOOR OR HATCH ON A MOTOR VEHICLE
POIGNEE EXTERIEURE POUR UNE PORTIERE OU UN HAYON DE VEHICULE AUTOMOBILE

(30) Priorität: 31.08.2005 DE 102005041551
(43) Veröffentlichungstag der Anmeldung: 04.06.2008
(73) Patentinhaber: HUF Hülsbeck & Fürst GmbH & Co. KG, 42551 Velbert (DE)
(72) Erfinder: NEUHOFF, Stefan, 45239 Essen (DE); SCHINDLER, Mirko, 42549 Velbert (DE)
(86) Internationale Anmeldenummer: PCT/EP2006/008393
(87) Internationale Veröffentlichungsnummer: WO 2007/025689

(56) Entgegenhaltungen:
- WO-A-20/04063504
- DE-A1- 10 212 794
- DE-A1- 10 240 828
- FR-A1- 2 828 225

## Beschreibung

Die vorliegende Erfindung betrifft einen Aussengriff für eine Tür oder Klappe an einem Kraftfahrzeug, mit einem Griffteil und mindestens einem kapazitiven Aktivierungssensor zur Aktivierung von Entriegelungs- und / oder Verriegelungsvorgängen.

Aus der DE 102 40 828 A1 ist ein Zugangsystem für ein Kraftfahrzeug bekannt, das mit einem Türaussengriff ausgestattet ist, in dem Aktivierungsmittel zur Veranlassung der Generierung eines Entriegelungs-Aufforderungsignals und eines Verriegelungsaufforderungssignals angeordnet sind. Bei den Aktivierungsmitteln handelt es sich unter anderem um kapazitive Sensoren.

Bei Annäherung des Fahrzeugnutzers erkennt ein Näherungssensor die Annäherung und startet die Abfrage des Zugangsberechtigungscodes vom ID-Geber, den der Fahrzeugnutzer bei sich trägt. Nach erfolgreicher Übermittlung und Überprüfung des Codes veranlasst eine Steuereinheit des Fahrzeugs die Entriegelung.

Der Schließvorgang wird durch die Betätigung eines Sensors im Bereich des Türgriffes in ähnlicher Form eingeleitet. Das Auslösen des Sensors löst eine Berechtigungsabfrage aus und sofern der ID-Geber, der sich in der Nähe befinden muss den korrekten Code zurücksendet hat, wird der Verriegelungsvorgang ausgeführt.

Der Einsatz von kapazitiven Sensoren bei passiven Zugangsystemen von Kraftfahrzeugen hat sich prinzipiell in der Praxis bewährt, es gibt jedoch Probleme in Bezug auf Fehlauslösungen, insbesondere bezüglich des Auslösens des Verriegelungsvorganges.

Die Fehlauslösungen werden vorrangig durch Wasser verursacht, das am Griff über das Betätigungsfeld des Sensors abläuft. Das Wasser beeinflusst das kapazitive Feld, so dass die Auswertelektronik dies als Kapazitätsänderung feststellt und die Kommunikation mit dem ID-Geber auslöst. Wenn sich der Fahrzeugnutzer nun in der Nähe seines Fahrzeuges aufhält, das kann auch heißen sich ggf. mit dem ID-Geber im Fahrzeug befindet, wird der Verriegelungsvorgang ohne Beabsichtigung eingeleitet. Wasser läuft in der Regel bei Regen oder etwa beim Waschen am Griff herunter.

Der Erfindung liegt daher die Aufgabe zugrunde ein Aussengriff mit einfachen Mitteln und unter geringen Kosten, so zu gestalten, dass auftropfendes oder ablaufendes Wasser etwaige kapazitive Sensoren des Entriegelungs- und Verriegelungssystems an Fahrzeugen nicht beeinflusst.

Gelöst wird diese Aufgabe dadurch, dass das Betätigungsfeld mindestens eines Sensors im unteren Bereich des Aussengriffs angeordnet ist, so dass Regen und ablaufendes Wasser kein Auslösung des Sensors verursacht. Der Regen trifft nur auf die oben liegenden und seitlichen Flächen.

Vorteilhaft an dieser technischen Lösung ist, dass wirksam verhindert wird, dass es zu, für den Fahrzeugnutzer ärgerlichen, Fehlauslösungen kommt und dass diese Maßnahme kostengünstig, gerade in der Massenfertigung, eingesetzt werden kann.

In einer Ausgestaltung der Erfindung ist das. Betätigungsfeld am Griffteil angeordnet. In einer weiteren Ausgestaltung ist das Betätigungsfeld am Zylinderturm oder der Zylinderturmattrappe angeordnet.

Die Erfindung sieht in vorteilhafter Weise vor, dass das Betätigungsfeld am Randbereich einen Vorsprung aufweist, der anlaufendes Wasser abtropfen lässt.

Der Vorsprung kann umlaufend sein oder sich nur über einen Teilbereich des Betätigungsfeldes erstrecken.

Alternativ kann anstatt eines Vorsprungs eine Nut oder eine Nutbereich zum gleichen Zweck Verwendung finden.

Das auf den Aussengriff auftreffende Wasser läuft nach unten ab, doch bevor es an der Unterseite entlang fließt und auf die Betätigungsfläche trifft, läuft es über den Vorsprung oder die Nut, die ein Abtropfen vom Aussengriff verursachen.

Die Erfindung sieht in vorteilhafter Weise vor, dass der Vorsprung oder die Nut im bzw. aus dem Griffteil gebildet sind.

Alternativ kann vorgesehen sein, dass der Vorsprung durch ein separates anzusetzendes Bauteil gebildet wird.

Die Erfindung sieht weiterhin in vorteilhafter Weise vor, dass der Aussengriff einen Näherungssensor aufweist.

In einer weiteren Ausgestaltung der Erfindung ist vorgesehen, dass das kapazitive Sensorelement, im Griffteil oder dem Zylinderturmteil, hinter dem Betätigungsfeld angeordnet ist.

Im folgenden wird unter Bezugnahme auf die Zeichnungen ein Ausführungsbeispiel der Erfindung erläutert:

Es zeigen:
- Fig. 1:: perspektivische Ansicht eines Türaussengriffs eines Fahrzeuges gemäß dem Stand der Technik
- Fig 2.:: eine perspektivische Ansicht eines Griffteils, an welchen die Erfindung realisiert ist
- Fig. 3. :: eine Schnitt durch das Griffteil eines erfindungsgemäßen Türaussengriffs

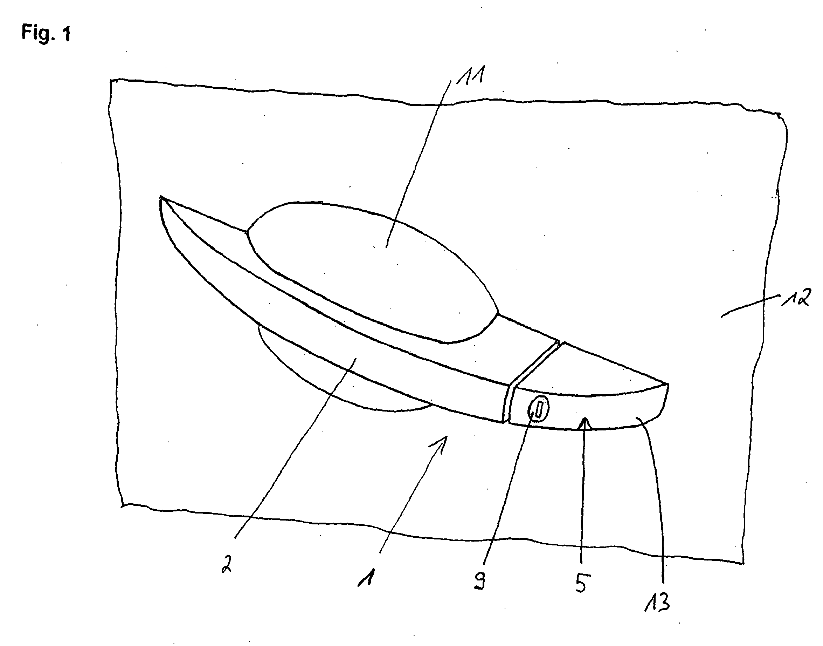

Figur 1 zeigt einen beweglichen Türaussengriff 1 eines Kraftfahrzeuges mit Passiv-Entry-Funktionen in perspektivischer Ansicht.

Beim Passiv-Entry-System trägt der Fahrzeugnutzer einen Identifikation-Geber (ID-Geber) bei sich, der zur Übermittlung eines Berechtigungscodes vom Fahrzeug per Funk aktiviert wird. Die Entriegelung und Verriegelung findet in der Normalfunktion ohne die Verwendung eines mechanischen Schlüssels oder aktive Bedienung eines Funkschlüssels nur aufgrund einer Codefreigabe statt.

Lediglich bei Ausfall des Systems kann der Fahrzeugnutzer mittels eines mechanischen Notschlüssels das Fahrzeug über den Schließzylinder 9 , der im Schließzylinderturm 10 untergebracht ist, mechanisch entriegeln, um Zugang zum Fahrzeug zu erhalten.

Es handelt sich um einen Ziehgriff, der durch Eingreifen der Hand in die Griffmulde 11, die in das Türblech 12 geformt ist , gegriffen werden kann, um ihn dann nach außen zu ziehen, wodurch das Türschloss, wenn es entriegelt ist, geöffnet wird, d.h. die Drehfalle im Schloss freigegeben wird.

In der Verlängerung des Türgriffs 1 schließt sich der Zylinderturm 5 an, der aus dem Schließzylinder 9 und einer Abdeckung 13 besteht.

Im Griffteil 2 sind mindestens zwei kapazitive Sensoren angeordnet. Einer sitzt zur Griffmulde hin gerichtet im Griffteil, der dazu dient die Anwesenheit einer Hand in der Griffmulde 11 zu detektieren. Aufgrund der verursachten Änderung des kapazitiven Feldes wird durch einen Controller ein Signal erzeugt, das den ID-Geber direkt anspricht oder die zentrale Steuereinheit dazu veranlasst den ID-Geber per Funk zur Sendung des Identifikations-Codes aufzufordern.

Nach Sendung des Identifikations-Codes seitens des ID-Gebers und seiner positiven Auswertung des Codes durch die zentrale Steuereinheit wird die Entriegelung der Türschlösser veranlasst.

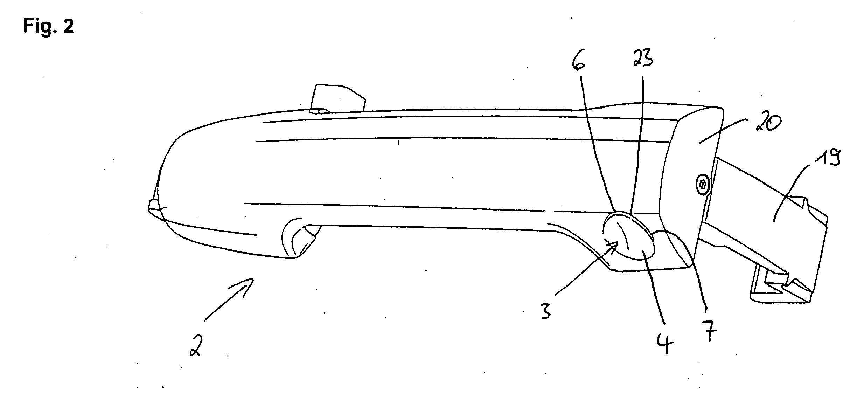

In Figur 2 ist ein erfindungsgemäßes Griffteil 2 eines Türaussengriffes 1 dargestellt, das einen zusätzlichen kapazitiven Sensor 3, zur Aktivierung der Verriegelung des Fahrzeuges, aufweist. Der kapazitive Sensor sitzt hinter der dem sichtbaren Betätigungsfeld 4. Das Berühren dieses Betätigungsfeldes 4 löst wiederum die Abfrage des ID-Gebers nach dem Identifikation-Code aus, damit sichergestellt ist, dass nur Berechtigte das Fahrzeug verriegeln können. Sofern sich der ID-Geber in der Funkreichweite befindet und der Code vom Fahrzug empfangen und positiv ausgewertet worden ist, wird der Verriegelungsvorgang ausgeführt.

Das Betätigungsfeld 4 ist eine vertiefte Mulde 15 auf der Unterseite 14 des Griffteils 2. Die Mulde 15 wird aus dem Griffteil 2 gebildet. Dahinter ist im Innenbereich des Griffteils 2 die kapazitive Elektrode 16 angeordnet.

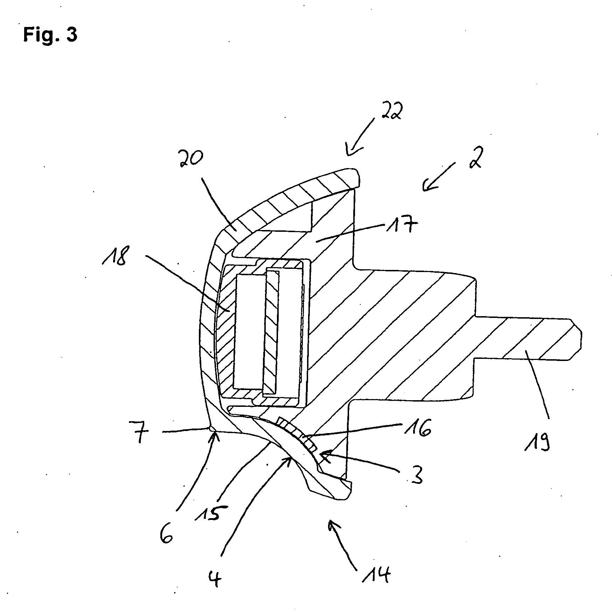

In Figur 3 ist im Schnitt durch die Mulde 15 und kapazitiven Element 16 der innere Aufbau des Griffteils 2 dargestellt.

Der Griffteil 2 ist zweiteilig aufgebaut und besteht aus einer Unterschale 17 mit angespritztem Betätigungsfinger 19, zur Betätigung des Schlosses und einer Oberschale 20. Die Unterschale nimmt die Griffelektronik 18 in einer Ausnehmung 21 auf, wobei die Griffelektronik 18 unter anderem weitere kapazitive Elemente und Controller beinhaltet.

Die Unterschale 17 mitsamt der Elektronik 18 wird durch die Oberschale 20 abgedeckt.

Die Oberschale 20 bildet gleichzeitig die sichtbare Seite zum Fahrzeugnutzer.

An der Unterseite 14 der Oberschale 20 ist eine Mulde 15 angeformt. Dahinter sitzt, von der Unterschale 17 aufgenommen, die Elektrode 16 des kapazitiven Sensors zur Aktivierung der Verriegelung des Fahrzeuges. Die Elektrode 16 ist mittels Kabel mit der Elektronik 18, bzw. einem Controller verbunden.

An der Oberseite der Mulde 15 ist ein Vorsprung 7 aus dem Material der Oberschale 20 herausgebildet, der so gestattet ist, dass das Wasser, das von der Oberseite 22 zur Unterseite 14 über das Betätigungsfeld 4 des kapazitiven Sensors 3 fließen würde, dort abtropft. Dadurch werden Fehlauslösungen wirksam verhindert.

Der Vorsprung 7 ist nur am oberen Rand 23 der Mulde 15 ausgebildet, kann aber auch umlaufend ausgebildet werden.

Des Weiteren kann das Abtropfelement als Nut ausgebildet sein oder als zusätzliches, ggf. gestalterisches Element auf den Griffteil aufgebracht sein, z.b. durch einen Ring der aufgeklebt wird.

Die Mulde 7 mitsamt kapazitiver Elektrode 16 kann alternativ im Zylinderturm 5, bzw. einer Zylinderturmattrappe an den übrigen Türgriffen des Fahrzeugs, die keinen Schließzylinder enthalten, integriert sein.

Es ist genauso möglich weitere kapazitive Sensoren am Aussengriff für weitere Komfortbetätigungen bei gleichem Aufbau zu integrieren, sei es am Griffteil 2, Zylinderturm 5 oder jeweils am Griffteil 2 und Zylinderturm 5.

Die Anwendung ist nicht auf Ziehgriffe beschränkt, sondern kann auch bei Klappgriffen und Heckklappenbetätigern zum Einsatz kommen.

## Patentansprüche

1. Aussengriff (1) für eine Tür oder Klappe an einem Kraftfahrzeug, mit einem Griffteil (2) und mit mindestens einem kapazitiven Aktivierungssensor (3) zur Aktivierung von Entriegelungs- und/ oder Verriegelungsvorgängen **dadurch gekennzeichnet, dass** das Betätigungsfeld (4) mindestes eines Sensors (3) im unteren Bereich des Aussengriffs (1) angeordnet ist, so dass Regen und ablaufendes Wasser keine Auslösung des Sensors (3) verursachen.

2. Aussengriff nach Anspruch 1, **dadurch gekennzeichnet, dass** das mindestens eine Betätigungsfeld (4) am Griffteil (2) angeordnet ist.

3. Aussengriff nach Anspruch 1, **dadurch gekennzeichnet, dass** das mindestens eine Betätigungsfeld (4) am Zylinderturm (4) oder der Zylinderturmattrappe angeordnet ist.

4. Aussengriff nach einem der Ansprüche von 1 bis 3 **dadurch gekennzeichnet, dass** das Betätigungsfeld (4) am Randbereich einen Vorsprung (7) aufweist, der anlaufendes Wasser abtropfen lässt.

5. Aussengriff nach Anspruch 4 , **dadurch gekennzeichnet, dass** der Vorsprung (7) um das Betätigungsfeld (4) umlaufend angeordnet ist.

6. Aussengriff nach Anspruch 4, **dadurch gekennzeichnet , dass** der Vorsprung (7) an der Oberseite des Betätigungsfeldes (4) über einen Teilbereich angeordnet ist.

7. Aussengriff nach einem der Ansprüche von 4 bis 6 **dadurch gekennzeichnet, dass** der Vorsprung (7) einteilig aus einem Griffbauteil (8) gebildet wird.

8. Aussengriff nach einem der Ansprüche von 4 bis 6 **dadurch gekennzeichnet, dass** der Vorsprung (7) aus einem separat auf das Griffteil aufgebrachten Teil gebildet wird.

9. Aussengriff nach einem der Ansprüche von 1 bis 3 **dadurch gekennzeichnet, dass** zur Wasserableitung das Betätigungsfeld (4) des Sensors (3) mit einer Nut umgeben ist.

10. Aussengriff nach einem der Ansprüche von 1 bis 3 **dadurch gekennzeichnet, dass** zur Wasserableitung das Betätigungsfeld (4) des Sensors (3) teilweise im oberen Bereich am Umfang mit einer Nut versehen ist.

11. Aussengriff nach einem der vorhergehenden Ansprüche **dadurch gekennzeichnet, dass** der Aussengriff (1) einen Näherungssensor aufweist.

12. Aussengriff nach einem der vorhergehenden Ansprüche **dadurch gekennzeichnet, dass** das kapazitive Sensorelement (3) im Griffteil (2) oder dem Zylinderturmteil (5) hinter dem Betätigungsfeld (4) angeordnet ist.

## Claims

1. Outer handle (1) for a door or hatch on a motor vehicle, comprising a handle piece (2) and comprising at least one capacitive activation sensor (3) for activation of the unlocking and/or locking processes, **characterised in that** the area of operation (4) of at least one sensor (3) is arranged in the lower region of the outer handle (1), so that rain and running water do not cause the triggering of the sensor (3).

2. Outer handle according to Claim 1, **characterised in that** the at least one area of operation (4) is arranged on the handle piece (2).

3. Outer handle according to Claim 1, **characterised in that** the at least one area of operation (4) is arranged on the lock cylinder mount (4) or the lock cylinder decoy.

4. Outer handle according to one of Claims 1 to 3, **characterised in that** the area of operation (4) has a projection (7) on the edge region, which allows accumulating water to drip off.

5. Outer handle according to Claim 4, **characterised in that** the projection (7) is arranged peripherally around the area of operation (4).

6. Outer handle according to Claim 4, **characterised in that** the projection (7) is arranged over a partial region on the upper face of the area of operation (4).

7. Outer handle according to one of Claims 4 to 6, **characterised in that** the projection (7) is formed in one piece from a handle component (8).

8. Outer handle according to one of Claims 4 to 6, **characterised in that** the projection (7) is formed from a part applied separately to the handle piece.

9. Outer handle according to one of Claims 1 to 3, **characterised in that** for the discharge of water the area of operation (4) of the sensor (3) is surrounded by a groove.

10. Outer handle according to one of Claims 1 to 3, **characterised in that** for the discharge of water the area of operation (4) of the sensor (3) is partially provided in the upper region on the periphery with a groove.

11. Outer handle according to one of the preceding claims, **characterised in that** the outer handle (1) has a proximity sensor.

12. Outer handle according to one of the preceding claims, **characterised in that** the capacitive sensor element (3) is arranged in the handle piece (2) or the lock cylinder mount part (5) behind the area of operation (4).

## Revendications

1. Poignée extérieure (1) pour une porte ou un hayon sur un véhicule automobile, comprenant une partie poignée (2) et au moins un capteur d'activation (3) capacitif pour l'activation d'opérations de déverrouillage et/ou de verrouillage, **caractérisée en ce que** la zone d'actionnement (4) d'au moins un capteur (3) est disposée dans la zone inférieure de la poignée extérieure (1), de sorte que l'appui et l'eau qui s'écoule ne provoquent pas un déclenchement du capteur (3).

2. Poignée extérieure selon la revendication 1, **caractérisée en ce que** la au moins une zone d'actionnement (4) est disposée sur la partie de poignée (2).

3. Poignée extérieure selon la revendication 1, **caractérisée en ce que** la au moins une zone d'actionnement (4) est disposée sur la tour de cylindre (4) ou le simulacre de tour de cylindre.

4. Poignée extérieure selon l'une quelconque des revendications 1 à 3, **caractérisée en ce que** la zone d'actionnement (4) présente sur la zone périphérique une saillie (7) qui laisse égoutter l'eau qui se forme.

5. Poignée extérieure selon la revendication 4, **caractérisée en ce que** la saillie (7) est disposée en entourant la zone d'actionnement (4).

6. Poignée extérieure selon la revendication 4, **caractérisée en ce que** la saillie (7) est disposée sur le côté supérieur de la zone d'actionnement (4) sur une zone partielle.

7. Poignée extérieure selon l'une quelconque des revendications 4 à 6, **caractérisée en ce que** la saillie (7) est formée d'une seule pièce à partir d'un composant de poignée (8).

8. Poignée extérieure selon l'une quelconque des revendications 4 à 6, **caractérisée en ce que** la saillie (7) est formée d'une pièce appliquée séparément sur la partie de poignée.

9. Poignée extérieure selon l'une quelconque des revendications 1 à 3, **caractérisée en ce que**, pour l'évacuation de l'eau, une zone d'actionnement (4) du capteur (3) est entouré d'une rainure.

10. Poignée extérieure selon l'une quelconque des revendications 1 à 3, **caractérisée en ce que**, pour l'évacuation de l'eau, la zone d'actionnement (4) du capteur (3) est dotée d'une rainure en partie dans la zone supérieure sur le pourtour.

11. Poignée extérieure selon l'une quelconque des revendications précédentes, **caractérisée en ce que** la poignée extérieure (1) présente un capteur de proximité.

12. Poignée extérieure selon l'une quelconque des revendications précédentes, **caractérisée en ce que** l'élément capteur (3) capacitif est disposé dans la partie poignée (2) ou la partie de tour de cylindre (5) derrière la zone d'actionnement (4).
